# EUROPÄISCHE PATENTANMELDUNG

(11) **EP 3 800 755 A1**
(43) Veröffentlichungstag der Anmeldung: **07.04.2021**
(21) Anmeldenummer: 20202632.4
(22) Anmeldetag: 20.05.2015
(51) Int. Cl.: H02J 3/18, H02J 3/38, H02J 13/00, H02J 3/48, H02J 3/50, H02J 3/46

(54) **VORRICHTUNG UND VERFAHREN ZUR REGELUNG VON DEZENTRALEN ENERGIEERZEUGUNGSANLAGEN**

(30) Priorität: 20.05.2014 DE 102014107115
(62) Teilanmeldung aus: 15724256.1
(71) Anmelder: Phoenix Contact GmbH & Co. KG, 32825 Blomberg (DE)
(72) Erfinder: OESSELKE, Thomas, 33034 Brakel (DE); SAUER, Björn, 71229 Leonberg (DE); PIRCHER, Hans-Peter, 5110 Oberndorf bei Salzburg (AT)
(74) Vertreter: Blumbach · Zinngrebe Patentanwälte PartG mbB

(57) **Zusammenfassung**

Es wird ein Verfahren zum Regeln von dezentralen Energieerzeugungsanlagen vorgestellt. Das Verfahren umfasst die Schritte Empfangen von Steuerbefehlen und/oder Messen von Versorgungsnetzparametern, Verarbeiten der empfangenen Steuerbefehle und/oder der gemessenen Versorgungsnetzparameter, Erstellen von Steuersignalen in Ansprechen auf die empfangenen Steuerbefehle und/oder der gemessenen Versorgungsnetzparameter zum Steuern eines ersten Wechselrichters, Übertragen der erstellten Steuersignale an eine Wechselrichterschnittstelle zur Ausgabe an einen ersten Wechselrichter, Anpassen von Anlagenparametern, insbesondere der Leistungsabgabe, der dezentralen Energieerzeugungsanlage mittels des ersten Wechselrichters in Ansprechen auf die von der Wechselrichterschnittstelle empfangenen Steuersignale. Es wird ferner eine Energieerzeugungsanlagenregelung und eine Energieerzeugungsanlage mit einer Energieerzeugungsanlagenregelung zur Ausführung des Verfahrens vorgestellt.

## Beschreibung

### Gebiet der Erfindung

Die Erfindung betrifft ein Verfahren zum Regeln einer Energieerzeugungsanlage, eine Regeleinheit sowie eine Energieerzeugungsanlage mit einer Regeleinheit.

### Hintergrund der Erfindung

Der Anteil der Stromerzeugung aus dezentralen Energieerzeugungsanlagen (EZA) ist in den vergangenen Jahren international erheblich gewachsen. Die weltweit installierte Photovoltaik-Leistung hat sich im Zeitraum von 2000 bis 2012 von einem Gigawatt auf über 100 Gigawatt erhöht. Aufgrund des dezentralen Charakters dieser Art der Energieerzeugung sowie der damit einhergehenden zeitweisen Lastumkehr ergeben sich neue Herausforderungen für die Netzbetreiber. So führt ein Überangebot von Wirkleistung im Netz zu einem Anstieg von Netzspannung und Frequenz. Um die Netzstabilität sicherstellen zu können, wurden in den letzten Jahren entsprechende Gesetze und Richtlinien auf nationaler Ebene in Kraft gesetzt, welche die technischen Bedingungen für den Netzanschluss dezentraler Energieerzeugungsanlagen regeln. Auch dezentrale EZA müssen somit nun ihren Beitrag zu einer hohen Netzstabilität leisten.

In Deutschland verlangt das Erneuerbare-Energien-Gesetz (EEG) seit 2012 die Beteiligung regenerativer Energieerzeugungsanlagen am Einspeise-Management, damit die Wirkleistung begrenzt wird. Dies gilt unabhängig von der Spannungsebene, in der die Netzankopplung der Anlage erfolgt. Die Anforderungen an die Scheinleistungs-Regelung sind für die Niederspannungsebene in der VDE-AR 4105 und für die Mittelspannungsebene in der technischen Richtlinie für Erzeugungsanlagen am Mittelspannungsnetz des BDEW (Bundesverband der Energie- und Wasserwirtschaft) aufgeführt. International gibt es technisch vergleichbare Rahmenbedingungen, beispielsweise die CEI 16 (Mittelspannung) respektive CEI 21 (Niederspannung) in Italien. Auch wenn die Anschlussregeln auf nationaler Ebene im Detail voneinander abweichen, stellt sich in der Regel stets die gleiche grundlegende Aufgabe: Ziel ist es dabei, die Netzfrequenz und -spannung in einem Bereich zu halten, der die Stabilität des Netzes garantiert.

Eine wesentliche technische Herausforderung resultiert aus der fehlenden Standardisierung der Protokolle, über die die Wechselrichter Daten austauschen. Aus diesem Grund handelt es sich bei den verfügbaren Lösungen typischerweise um einen proprietären Ansatz des jeweiligen Wechselrichter-Herstellers oder eines Drittanbieters. Lösungen von Drittanbietern sind in der Regel jedoch auf ein Wechselrichterfabrikat beschränkt, also ebenso wie die wechselrichterspezifischen Lösungen der Wechselrichterhersteller nicht universell einsetzbar. Dies ist aber auch beispielsweise dann ein Nachteil, wenn Energieerzeugungsanlagen mit Wechselrichtern unterschiedlicher Hersteller aufgebaut sind oder wenn in dem gleichen Versorgungsnetz Energieerzeugungsanlagen unterschiedlichen Typs miteinander kombiniert werden.

Ein weiteres Problem des Netzbetreibers ergibt sich aus der fehlenden Standardisierung hinsichtlich der Fernwirktechnik, die zur Übermittlung der Sollwert-Vorgabe für Wirk- und Blindleistung sowie zur Rückmeldung der Istwerte der Anlage an den Netzbetreiber eingesetzt wird. In der Praxis bedeutet das, dass zusätzliche Kommunikations-Gateways zwischen dem EZA-Regler und der Fernwirktechnik des Netzbetreibers zu installieren sind.

### Allgemeine Beschreibung der Erfindung

Vor diesem Hintergrund hat die Anmelderin Phoenix Contact eine EZA-Reglerfunktion entwickelt, die Systemintegratoren in komplexen Energieerzeugungsanlagen (EZA) wie beispielsweise Photovoltaikgeneratoren, Windkraftanlagen, Blockheizkraftwerken (BHKW) oder Dieselgeneratoren oder einer Kombination daraus, unterstützt.

Es ergibt sich eine Aufgabe der vorliegenden Erfindung, einen EZA-Regler bereit zu stellen, welcher eine hohe Flexibilität und/oder Modularität aufweist.

Ein weiterer Aspekt der Aufgabe ist, den EZA-Regler kostengünstig zu gestalten.

Ein weiterer Aspekt der Erfindung betrifft ein Verfahren zum Regeln einer oder mehrerer dezentraler Energieerzeugungsanlagen.

Die Erfindung stellt auch eine Energieerzeugungsanlage mit einem EZA-Regler bereit.

Weitere Aufgaben ergeben sich aus der nachfolgenden Beschreibung bzw. den besonderen Vorteilen die mit bestimmten Ausführungsformen erzielt werden.

Die Aufgabe wird durch den Gegenstand der unabhängigen Ansprüche gelöst. Vorteilhafte Ausführungsformen sind Gegenstand der abhängigen Ansprüche.

Die Erfindung beschreibt eine Regelvorrichtung für dezentrale EZA, ein Verfahren zur Regelung von dezentralen EZA und ein Verfahren zur Inbetriebnahme für dezentrale EZA, insbesondere für Photovoltaikanlagen.

In netzgekoppelten, dezentralen Energieerzeugungsanlagen wird durch Generatoren elektrische Energie erzeugt. Vor Einspeisung in das Netz muss die elektrische Spannung in der Regel durch Umrichter und ggf.
Transformatoren an das Netz angepasst werden. Zur Wahrung der Netzstabilität kann es bei einem hohen Anteil von Energieeinspeisung aus dezentralen Energieerzeugungsanlagen erforderlich werden, die Höhe der von der dezentralen Energieerzeugungseinheit in das elektrische Versorgungsnetz eingespeisten Blindleistung und/oder Wirkleistung beispielsweise in Abhängigkeit von der aktuellen Netzspannung, Netzfrequenz und Wirkleistung am Netzverknüpfungspunkt der dezentralen Erzeugungseinheit zu regeln. Dies kann über einen steuernden Zugriff über ein Kommunikationsprotokoll und/oder über binäre Steuersignale auf die eingesetzten Wechselrichter erfolgen. Mit anderen Worten können mittels der Steuerung eines oder mehrerer Wechselrichter(s) einer dezentralen Energieerzeugungseinheit die vorgenannten Kennwerte und somit letztlich die Leistungsabgabe der dezentralen Energieerzeugungseinheit in das elektrische Versorgungsnetz geregelt werden.

In dem erfindungsgemäßen Verfahren zum Regeln von dezentralen Energieerzeugungsanlagen werden die folgenden Schritte durchgeführt. Zunächst wird eine Datenbasis geschaffen, aus der heraus die Regelungsanweisungen erzeugt werden können. Hierfür können zum Beispiel Steuerbefehle empfangen werden, welche vom Versorgungsnetzbetreiber insbesondere als Fernwirksignal vorgehalten bzw. übertragen werden. Alternativ oder kumulativ können Versorgungsnetzparameter gemessen werden, mit denen beispielsweise ein Steuerungsmodul selbsttätig die nötigen Berechnungen durchführen kann. Versorgungsnetzparameter sind beispielsweise Versorgungsnetzspannung, Versorgungsnetzfrequenz.

Es können auch alternativ oder zusätzlich elektrische Parameter der dezentralen Energieerzeugungseinheit gemessen und der Verarbeitung zugeführt werden. Beispiele dieser Parameter sind die eingespeiste Blindleistung oder die Wirkleistung. Bevorzugt werden die Versorgungsnetzparameter und/oder die elektrischen Parameter der dezentralen EZA an einem Netzverknüpfungspunkt der dezentralen EZA gemessen.

Die empfangenen Steuerbefehle und/oder die gemessenen Versorgungsnetzparameter werden in einem weiteren Schritt verarbeitet. Für die Verarbeitung kann das Steuerungsmodul herangezogen werden.

In Ansprechen auf die empfangenen Steuerbefehle und/oder die gemessenen Versorgungsnetzparameter werden in einem weiteren Schritt Steuersignale zum Steuern eines ersten Wechselrichters erstellt. Mit anderen Worten werden die Steuerbefehle in Änderungsanweisungen für den Wechselrichter übersetzt. Hierbei wird der Typ des Wechselrichters berücksichtigt, der bevorzugt bereits bei Inbetriebnahme der modularen Energieerzeugungsanlagenregelung in einem Speicher zur weiteren Verwendung abgelegt wird.

Der Typ des Wechselrichters ist dabei von Bedeutung, da verschiedenartige Wechselrichter nicht nur verschiedenartige Schnittstellen aufweisen können, sondern auch verschiedenartige Kommunikationsprotokolle eingesetzt werden können. Somit ist bereits bei der Erzeugung der Steuersignale der Typ des Wechselrichters zu berücksichtigen. Beispielsweise kann der Wechselrichter aus einer vordefinierten Liste auswählbar sein. Bevorzugt ist die vordefinierte Liste modifizierbar, so dass neu entwickelte Wechselrichter und Kommunikationsprotokolle Berücksichtigung finden können.

Bei heutigen dezentralen EZA ist es typisch, dass ein oder mehrere Wechselrichter zwischen den Generatoren der Anlage und dem Versorgungsnetz eingesetzt sind. Der Wechselrichter stellt somit die elektrische Verbindung und Anpassung an die Spezifikationen des Versorgungsnetzes her. Dies liegt auch daran, da bei der Arbeitsweise mit einem Wechselrichter eine solche Anpassung an die Versorgungsnetzparameter überhaupt ermöglicht ist. Jedoch sollen auch solche dezentralen EZA mit der vorliegenden Regelung und dem Regelungsverfahren regelbar sein, die über keinen Wechselrichter verfügen. Beispielsweise ist es denkbar, eine Windkraftanlage, die direkt Wechselstrom erzeugt, direkt zu drosseln, um die elektrischen Parameter an die Versorgungsnetzparameter anzupassen.

Die erstellten Steuersignale werden in einem weiteren Schritt an eine Wechselrichterschnittstelle zur Ausgabe an den ersten Wechselrichter übertragen. Die Wechselrichterschnittstelle ist dabei bevorzugt bereits so ausgewählt, dass sie zu dem einzusetzenden Wechselrichter der dezentralen EZA verbindbar ist.

In noch einem weiteren Schritt werden Anlagenparameter der dezentralen EZA so angepasst, dass die Vorgaben des Versorgungsnetzbetreibers und/oder Grenzwerte des Versorgungsnetzes eingehalten werden. Mit anderen Worten wird typischerweise die Leistungsabgabe der dezentralen EZA angepasst, also gedrosselt. Die Anpassung der dezentralen EZA wird dabei mittels des ersten Wechselrichters in Ansprechen auf die von dem Wechselrichter von der Wechselrichterschnittstelle empfangenen Steuersignale durchgeführt.

Besonders bevorzugt vermag das vorgestellte Verfahren und die vorgestellte Energieerzeugungsanlagenregelung mehr als einen Wechselrichter gleichzeitig zu steuern. Der erste und der zweite Wechselrichter können dabei verschiedenartig zueinander sein. So können der erste und der zweite Wechselrichter in der gleichen dezentralen EZA eingesetzt sein, der erste Wechselrichter kann aber auch in der ersten dezentralen EZA eingesetzt sein und der zweite Wechselrichter in einer zweiten dezentralen EZA. Der Aufbau der dezentralen EZA und die Zuordnung des ersten Wechselrichters und des zweiten Wechselrichters zu einer dezentralen EZA ist dabei bevorzugt vorab zur weiteren Verwendung gespeichert.

Der zweite Wechselrichter steht dabei stellvertretend für einen oder mehrere weitere Wechselrichter. So können bevorzugt auch 3, 4 oder mehr zueinander jeweils verschiedenartige Wechselrichter von der Energieerzeugungsanlagenregelung gleichzeitig gesteuert werden.

Aus den Steuerbefehlen werden zum Steuern des von dem ersten Wechselrichter verschiedenartigen zweiten Wechselrichters bevorzugt zweite Steuersignale gebildet. Die erstellten Steuersignale werden dann in einem weiteren Schritt an eine zweite Wechselrichterschnittstelle zur Ausgabe der Steuersignale an den zweiten Wechselrichter übertragen. Mit anderen Worten sind mehrere, bevorzugt verschiedenartige, Wechselrichterschnittstellen vorhanden, wobei jeder Wechselrichterschnittstelle ein vordefinierter Typ von Wechselrichter zugeordnet ist. Es können ggf. mehrere gleichartige Wechselrichter mit einer Wechselrichterschnittstelle verbunden sein. Typischerweise wird jedoch eine Wechselrichterschnittstelle zu genau einem Wechselrichter oder einem Wechselrichtertyp zugeordnet, so dass für jeden Wechselrichter eine weitere Wechselrichterschnittstelle eingesetzt wird.
In einem weiteren Schritt werden die Anlagenparameter der dezentralen Energieerzeugungsanlage mittels des ersten und des zweiten Wechselrichters in Ansprechen auf die jeweils von der Wechselrichterschnittstelle empfangenen Steuersignale angepasst. Anlagenparameter ist dabei insbesondere die Leistungsabgabe der dezentralen EZA.

Bevorzugt ist der zweite Wechselrichter in einer zweiten dezentralen Energieerzeugungsanlage angeordnet.

Hierarchisch betrachtet wird davon ausgegangen, dass der an einem Netzverknüpfungspunkt hängende Gesamtverbund einer Energieerzeugungsanlage eine zusammengehörige EZA darstellt. Innerhalb einer EZA, die an einem Netzverknüpfungspunkt verbunden ist, können Teilenergieerzeugungsanlagen gebildet sein, wobei jeder Teilenergieerzeugungsanlage ein steuerbarer Wechselrichter zugeordnet ist. Somit definieren die Wechselrichter die Aufteilung der EZA, wohingegen die Netzverknüpfungspunkte die Zugehörigkeit zu einer EZA bestimmen. Mehrere EZA weisen daher mehrere Netzverknüpfungspunkte auf.

Eine modulare Energieerzeugungsanlagenregelung (EZR) zur Regelung dezentraler Energieerzeugungsanlagen umfasst ein programmierbares Steuerungsmodul zur Erzeugung von wechselrichterspezifischen Steuersignalen zum Steuern des ersten Wechselrichters. Der erste Wechselrichter ist dabei der dezentralen Energieerzeugungsanlage zugeordnet.

Die modulare EZR umfasst ferner einen Programmspeicher des Steuerungsmoduls für ein Steuerungsprogramm. Mit anderen Worten kann das Steuerungsprogramm in dem Programmspeicher abgelegt sein.

Das Steuerungsprogramm umfasst bevorzugt Softwarebausteine, die einzeln, also modular, in dem Programmspeicher ablegbar sind, so dass der Programmspeicher den jeweiligen Softwarebaustein, der zur Ausführung der benötigten Funktionen geeignet ist, enthält. Beispielsweise umfasst ein Softwarebaustein den Code zum Übersetzen der Steuerbefehle in Steuersignale eines bestimmten Wechselrichtertyps. Durch Implementation mehrerer Softwarebausteine können so auf einfache Weise mehrere beispielsweise verschiedenartige Wechselrichter gesteuert werden, wenn die passenden Softwarebausteine in dem Programmspeicher abgelegt sind.

Das Steuerungsmodul weist ferner bevorzugt einen Prozessor auf zur Verarbeitung sowie Ein- und/oder Ausgabe von Signalen bzw. Befehlen.

Mit anderen Worten stellt das Steuerungsmodul alle verarbeitenden Funktionen zur Verfügung und die Wechselrichterschnittstellen, Fernwirksignalschnittstelle oder auch die Messgeräteschnittstelle geben die verarbeiteten Daten in Form von Signalen aus.

Die EZR umfasst ein Erweiterungssystem zum modularen Ergänzen von Erweiterungsmodulen an das programmierbare Steuerungsmodul. Das Erweiterungssystem ist derart ausgeführt, dass eines oder mehrere Erweiterungsmodule ergänzt werden können. Beispielsweise ist ein einfaches Erweiterungssystem dadurch realisiert, dass steckbare Busverbinder die Module direkt miteinander koppeln und den Datenaustausch zwischen den Modulen ermöglichen. Eine hochgradig modulare EZR erlaubt es, die benötigten Funktionen insbesondere der Ansteuerung verschiedenartiger Wechselrichter zu realisieren. Ferner ist es ermöglicht, dies mit einer kostengünstigen und integrierten Plattform darzustellen.

Ferner ist von dem EZR ein mit dem programmierbaren Steuerungsmodul koppelbares erstes Erweiterungsmodul umfasst. Das erste Erweiterungsmodul weist zumindest eine Wechselrichterschnittstelle auf, es wird auch als Wechselrichterschnittstellenmodul bezeichnet. Das Wechselrichterschnittstellenmodul stellt die Verbindung mit dem zumindest einen Wechselrichter her. Mit anderen Worten ist die Signalverbindungsleitung des Wechselrichters unmittelbar am Wechselrichter einerseits und unmittelbar an der Wechselrichterschnittstelle der EZR andererseits angeschlossen.

Mittels des Wechselrichterschnittstellenmoduls werden wechselrichterspezifische Steuersignale an den Wechselrichter über die Wechselrichterschnittstelle ausgegeben.

Bevorzugt umfasst die EZR ferner ein zweites Erweiterungsmodul. Das zweite Erweiterungsmodul steht dabei für ein oder mehrere weitere Erweiterungsmodule. Es können ein zweites und ggf. weitere Wechselrichterschnittstellenmodule eingesetzt werden. Es können alternativ oder kumulativ beispielsweise ein Fernwirksignalmodul, ein Messmodul oder ein Kommunikationsmodul eingesetzt sein.

Das zweite Erweiterungsmodul als zweites Wechselrichterschnittstellenmodul weist zumindest eine Wechselrichterschnittstelle zur Herstellung der Verbindung mit einem zweiten Wechselrichter auf. Der zweite Wechselrichter ist bevorzugt verschiedenartig von dem ersten Wechselrichter. Mittels der Wechselrichterschnittstelle werden die wechselrichterspezifischen Steuersignale an den zweiten Wechselrichter des zweiten Wechselrichterschnittstellenmoduls ausgegeben.

Das zweite Erweiterungsmodul kann ein Fernwirksignalmodul mit einer Fernwirksignalschnittstelle umfassen, womit Steuerbefehle empfangen und an das Steuerungsmodul weitergeleitet werden können. Das Fernwirksignal wird von dem jeweiligen Netzbetreiber individuell erzeugt und über von diesem definierte Wege dem Anlagenbetreiber der EZA bereitgestellt. In dem Fernwirksignal kann auch bereits eine allgemeine Anlagenregelcharakteristik und/oder eine Wechselrichtersteuercharakteristik umfasst sein.

Ggf. wird ein solche Fernwirksignal nicht bereitgestellt. In diesem Fall, oder wenn es anderweitig interessant ist, kann das zweite Erweiterungsmodul ein Messmodul zum Erfassen von Anlagen- und/oder Versorgungsnetzparameter umfassen. Versorgungsnetzparameter sind beispielsweise die von der dezentralen EZA eingespeiste Blindleistung oder die Wirkleistung ggf. in Abhängigkeit der aktuellen Netzspannung, aber auch die Spannung und die eingespeiste Stromstärke. Diese Messgrößen können dem EZR direkt bereitgestellt werden.

Es ist aber auch eine Möglichkeit, mittels der EZR die Daten externer Messgeräte auszulesen. In diesem Fall kann das zweite Erweiterungsmodul ein Kommunikationsmodul zum Auslesen von Anlagenmessgeräten umfassen.

Das Steuerungsmodul und das erste Erweiterungsmodul sind bevorzugt in einem gemeinsamen Steuerkasten angeordnet. Ferner bevorzugt sind das Steuerungsmodul, das erste Erweiterungsmodul und/oder das zweite Erweiterungsmodul in einem gemeinsamen Steuerkasten angeordnet und zwar so benachbart nebeneinander, dass sie benachbart zueinander liegen. Dann können das Steuerungsmodul und die Erweiterungsmodule mittels einer Steckbusverbindung miteinander gekoppelt sein. Beispielsweise können das Steuerungsmodul und die Erweiterungsmodule auf einer gemeinsamen Hutschiene angebracht sein. Mit anderen Worten handelt es sich um eine integrierte Energieerzeugungsanlagenregelung, wobei die Komponenten Steuerungsmodul und Erweiterungsmodul bzw. Erweiterungsmodule an demselben Ort bzw. in einem gemeinsamen Steuerkasten angeordnet sind und bevorzugt von außen auf die Energieerzeugungsanlage einwirken. Insbesondere stellt die gemeinsame Anordnung von Steuerungsmodul mit Erweiterungsmodulen eine integrierte Regelungszentrale dar.

In einer anderen Ausführungsform sind das Steuerungsmodul und das zumindest eine Erweiterungsmodul in einem zentralen Steuerungs- oder Anschlusskasten der Energieerzeugungsanlage angeordnet. Der zentrale Steuerungskasten kann dabei die Funktionen eines dem Fachmann bekannten Generatoranschlusskastens übernehmen. Die Unterbringung der EZR in dem zentralen Steuerungskasten hat den Vorzug, dass kein weiterer getrennter Kasten für die EZR benötigt wird. Aufgrund der geringen Baugrößen bzw. des geringen Platzbedarfs der hier vorgestellten EZR ist eine Anbringung im zentralen Steuerungskasten überhaupt erst prinzipiell möglich. Mit anderen Worten sind im zentralen Steuerungskasten die wesentlichen Funktionen der Strangzusammenführung bzw. Energieverteilung (Generatoranschlusskasten) und Anlagenregelung (EZR) kombiniert. Es handelt sich damit insbesondere um eine integrierte Energieverteilungs- und Regelungszentrale.

Das erste Wechselrichterschnittstellenmodul ist in dieser Ausführungsform mit dem ersten Wechselrichter der dezentralen Energieerzeugungsanlage verbunden. Das zweite Wechselrichterschnittstellenmodul ist mit dem zweiten Wechselrichter verbunden. Hierbei kann der zweite Wechselrichter ein Wechselrichter der dezentralen Energieerzeugungsanlage oder ein Wechselrichter der weiteren dezentralen Energieerzeugungsanlage sein.

Falls daher eine weitere dezentrale Energieerzeugungsanlage von dem einen Steuerungsmodul gemeinsam mit der dezentralen Energieerzeugungsanlage geregelt wird, kann das zweite Wechselrichterschnittstellenmodul mit dem Wechselrichter der weiteren dezentralen Energieerzeugungsanlage verbunden sein. Mit anderen Worten können gleichzeitig mehrere dezentrale Energieerzeugungsanlagen besonders auch mit verschiedenartigen Wechselrichtern von einem Steuerungsmodul hinsichtlich der einzuhaltenden Versorgungsnetzparameter geregelt werden.

Das zumindest zweite Erweiterungsmodul kann in einem zweiten Steuerkasten angeordnet sein. Das bedeutet, dass das erste Erweiterungsmodul im Steuerkasten und das zweite Erweiterungsmodul, insbesondere das zweite Wechselrichterschnittstellenmodul, entfernt von dem ersten Erweiterungsmodul und dem Steuerungsmodul im zweiten Steuerkasten angeordnet ist. Dies kann dann sinnvoll sein, wenn zwei (oder mehr) EZA von dem Steuerungsmodul zu steuern sind, die beispielsweise voneinander beabstandet aufgebaut sind. Der Abstand zwischen dem Steuerkasten und dem zweiten Steuerkasten kann mittels einer Datenverbindungsleitung hinsichtlich des Datenaustausches überbrückt werden. Hierfür sind ggf. auch gewöhnliche Ethernet-Verbindungen geeignet. Mit anderen Worten kann das Erweiterungssystem somit die Datenverbindungsleitung zum Austausch von Daten zwischen dem Steuerungsmodul und dem zweiten Erweiterungsmodul umfassen. Hierbei tauscht das Steuerungsmodul über die Datenverbindungsleitung Daten mit dem zweiten Erweiterungsmodul aus.

In dem Programmspeicher des Steuerungsmoduls sind bevorzugt vordefinierte Softwarebausteine ablegbar. Die vordefinierten Softwarebausteine sind bevorzugt dazu ausgelegt, mit dem jeweiligen Erweiterungsmodul und/oder dem weiteren Erweiterungsmodul zu kommunizieren.

Eine erfindungsgemäße dezentrale Energieerzeugungsanlage umfasst elektrische Leistung bereitstellende Generatoren. Die Generatoren erzeugen die Energie der EZA. Bei den Generatoren handelt es sich insbesondere um Photovoltaikmodule, um Windkraftgeneratoren, Biomasseanlagen und/oder Blockheizkraftwerke. Die vorbezeichneten verschiedenartigen Generatoren können getrennten EZA zugehörig sein, eine EZA (Definition über den Netzverbindungspunkt) kann auch verschiedenartige Generatoren umfassen. Beispielsweise kann eine Kleinanlage eine Kombination aus einer Vielzahl von Solarmodulen und eine kleinere Windkraftanlage umfassen und stellt insgesamt die dezentrale EZA dar. In diesem Beispiel ist es eine Möglichkeit, dass die Solarmodule den ersten Wechselrichter speisen und die kleinere Windkraftanlage den zweiten Wechselrichter speist. Erster Wechselrichter und Solarmodule sind daher Teil eines ersten Teilgenerators der dezentralen EZA, zweiter Wechselrichter und Windkraftanlage sind Teil eines zweiten Teilgenerators der dezentralen EZA.

Mittels des Wechselrichters können die elektrischen Parameter der dezentralen Energieerzeugungsanlage, d.h. die "Anlagenparameter", an dasjenige des Versorgungsnetzes und/oder an die Vorgabe angepasst werden. Im zuvor ausgeführten Beispiel können mittels des ersten Wechselrichters die elektrischen Parameter des ersten Teilgenerators angepasst werden. Mittels des zweiten Wechselrichters können die elektrischen Parameter des zweiten Teilgenerators angepasst werden. Das Steuerungsmodul steuert den ersten und den zweiten Wechselrichter derart, dass insgesamt die Sollvorgabe des Netzbetreibers oder der Messwerte eingehalten werden.

Die dezentrale EZA umfasst daher eine wie zuvor beschriebene modulare Energieerzeugungsanlagenregelung zum Regeln von Parametern, insbesondere der Abgabeleistung, der dezentralen Energieerzeugungsanlage.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine Übersicht einer typischen Energieerzeugungsanlage,
- Fig. 2: eine weitere Energieerzeugungsanlage mit mehreren Teilgeneratoren,
- Fig. 3: wie Fig. 2, mit verschiedenartigen Teilgeneratoren,
- Fig. 4: Aufbau einer Energieerzeugungsanlagenregelung (EZR) in einem Schaltkasten,
- Fig. 5: zeigt das Zusammenwirken der modularen Programmbausteine mit den modularen Erweiterungsmodulen,
- Fig. 6: Übersicht der Kommunikationsverbindung mit dem Verteilnetzbetreiber,
- Fig. 7: Eine weitere Möglichkeit der Kommunikationsverbindung mit dem Verteilnetzbetreiber,
- Fig. 8 wie Fig. 7: als weitere Alternative,
- Fig. 9: Energieerzeugungsanlagenregelung ohne Fernwirksignal,
- Fig. 10: bla,
- Fig. 11: Ausführungsform mit dezentralen Wechselrichterschnittstellenmodulen.

### Detaillierte Beschreibung der Erfindung

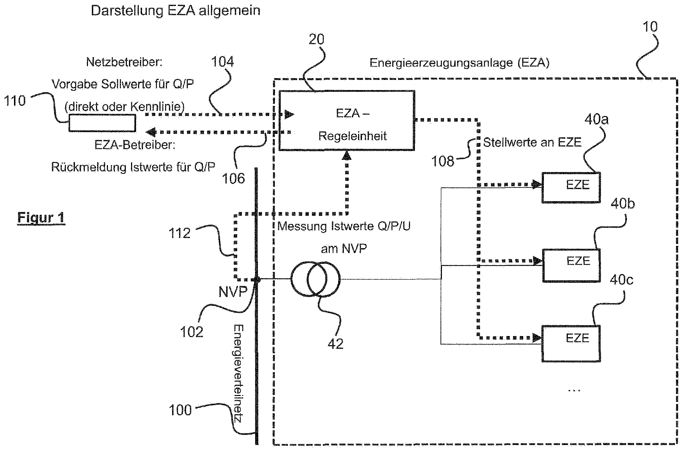

Fig. 1 zeigt eine typische Energieerzeugungsanlage 10, die an ein Energieverteilnetz 100 über einen Netzverknüpfungspunkt 102 verbunden ist.

Die Energieerzeugungsanlagenregelung 20 (EZR) erhält vom Netzbetreiber 110 mittels des Fernwirksignals 104 Vorgaben für Sollwerte beispielsweise für die Blindleistung Q oder die Wirkleistungsabgabe P. Die Sollwerte können beispielsweise als direkte Wertübermittlung übermittelt werden oder in Form einer Kennlinie lokal, insbesondere in der EZR 20, gespeichert sein. Die Kennlinie kann auch beispielsweise im Rahmen einer Fernwartung übermittelt werden, um die Kennlinie in der EZR 20 abzulegen. In der gezeigten Ausführungsform werden außerdem verschiedene Istwerte der Anlagenparameter am Netzverknüpfungspunkt 102 gemessen. Die Istwerte der Anlagenparameter werden von der EZR 20 verarbeitet und können beispielsweise mit den Sollwerten des Fernwirksignals 104 abgeglichen werden.

Aus dem Fernwirksignal 104 und/oder den Anlagenparameter werden Steuersignale für die Energieerzeugungseinheiten 12 (EZE), also im Besonderen für die Wechselrichter 40, erzeugt und an die Wechselrichter 40a, 40b, 40c gesendet. Die drei Wechselrichter 40a, 40b, 40c werden mittels der Steuersignale so eingestellt, dass die entsprechenden elektrischen Kennwerte an die Vorgaben angepasst werden.

In der Ausführungsform ist den Wechselrichtern 40a, 40b, 40c ein Transformator 42 nachgeschaltet, der die Ausgangsspannung der Wechselrichter 40a, 40b, 40c an das Spannungsniveau des Versorgungsnetzes 100 anpasst. Beispielsweise handelt es sich bei dem Versorgungsnetz 100 um ein Mittelspannungsnetz 100 wohingegen die Wechselrichter 40a, 40b, 40c beispielsweise Niederspannung bereitstellen, das heißt beispielsweise etwa 400V (insb. Europa) oder 480V (insb. Nordamerika) je nach den Vorgaben national gültiger Normen.

Eine Rückmeldung 106 an den Netzbetreiber 110 zu den Anlagen-Istwerten der EZA 10 kann ebenfalls von der EZR 20 durchgeführt werden.

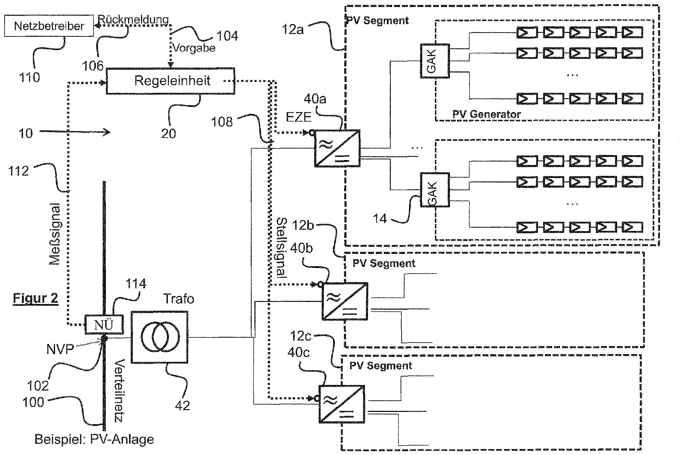

Figur 2 zeigt eine weitere schematische Übersicht einer dezentralen Energieerzeugungsanlage 10 in Form eines Photovoltaikgenerators 10a. Die dezentrale EZA 10 weist mehrere Teilgeneratoren 12a, 12b, 12c auf. Jeder Teilgenerator 12a, 12b, 12c weist einen zugeordneten Wechselrichter 40a, 40b, 40c auf. Somit sind in Figur 2 drei Energieerzeugungseinheiten (EZE) gezeigt, die gemeinsam die dezentrale EZA 10 bilden. Bei der ersten EZE 12a ist ferner ein Generatoranschlusskasten 14 gezeigt.

Der Netzbetreiber 110 gibt mittels des Fernwirksignals 104 Vorgaben an die EZR 20 zum Regeln der dezentralen EZA 10. Die EZR 20 setzt die Vorgaben um, indem aus den Vorgaben das Stellsignal 108 erzeugt wird, welches über das Wechselrichterschnittstellenmodul 24 an die Wechselrichter 40a, 40b, 40c ausgegeben wird. Die Wechselrichter 40a, 40b, 40c werden somit in Ansprechen auf die Vorgaben des Fernwirksignals 104 gesteuert. Die EZR 20 gibt in der gezeigten Ausführungsform auch eine Rückmeldung 106 an den Netzbetreiber 110.

An dem Netzverknüpfungspunkt 102 befindet sich in der Ausführungsform der Figur 2 eine Netzüberwachung 114, die die Anlagenparameter der dezentralen EZE 10 überwacht. Das von der Netzüberwachung 114 erhaltene Messsignal 112 wird an die EZR 20 abgegeben und von der EZR 20 verarbeitet.

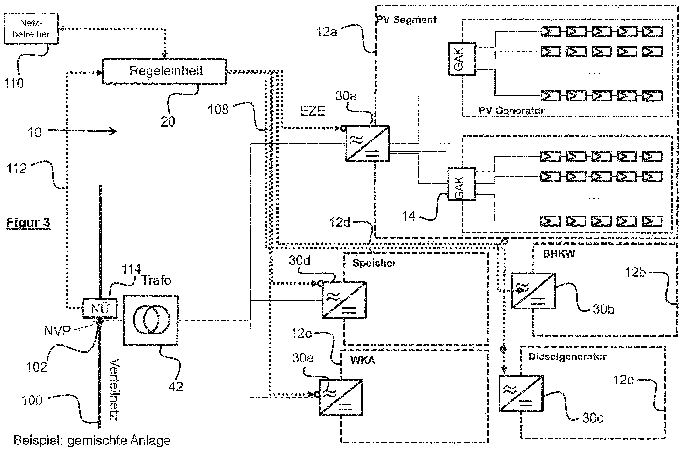

Figur 3 zeigt eine weitere Ausführungsform einer dezentralen EZA 10 mit verschiedenartigen Stromgeneratoren 12a, 12b, 12c, 12d, 12e. Bei 12a handelt es sich um einen Photovoltaikgenerator 12a, ein Blockheizkraftwerk 12b ist ein weiterer Teilgenerator der dezentralen EZA 10. Ferner kann ein Dieselgenerator 12c, ein Pufferspeicher 12d und/oder eine Windkraftanlage 12e Teilgenerator der dezentralen EZA 10 sein. Somit können auch hochkomplexe Mischbetriebsanlagen von einer EZR 20 geregelt werden. Jeder Teilgenerator 12a, 12b, 12c, 12d, 12e stellt eine Energieerzeugungseinheit EZE dar, die mit entsprechenden Steuersignalen hinsichtlich der Anlagenparameter angepasst werden kann.

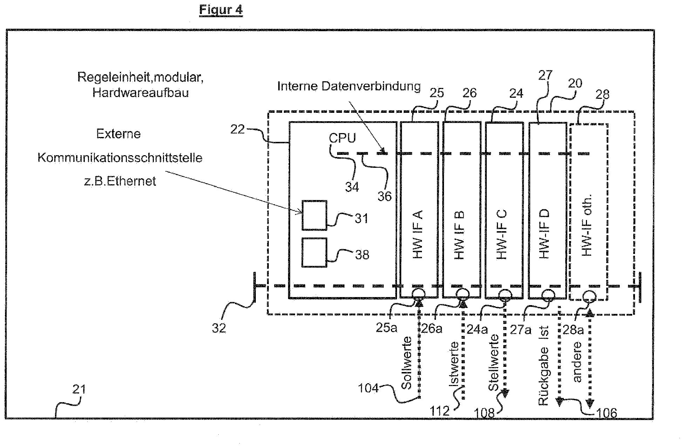

Figur 4 zeigt eine Energieerzeugungsanlagenregelung 20 (EZR) in einem Schaltkasten 21. Die gezeigte EZR 20 umfasst ein Steuerungsmodul 22 mit einem Prozessor (CPU) 34. Mittels eines Erweiterungssystems 36 können Erweiterungsmodule 24, 25, 26, 27, 28 an das Steuerungsmodul 22 angeschlossen werden.

Das Steuerungsmodul 22 bildet quasi das "Herz" der modularen EZR 20 mit dem Prozessor 34, sowie einem Programmspeicher 38. In dieser Ausführungsform umfasst das Steuerungsmodul 22 ferner eine zusätzliche Kommunikationsschnittstelle 31. Hierbei handelt es sich beispielsweise um eine Ethernetschnittstelle 31 zum Warten des Steuerungsmoduls 22, also insbesondere um Softwarebausteine in den Programmspeicher 38 zu laden und/oder neue Programmversionen aufzuspielen.

Das Erweiterungssystem 36 umfasst vorliegend auch eine interne Datenverbindung. Die hier als Steckbussystem ausgeführte Datenverbindung ist somit ein integriertes Erweiterungssystem 36.

Mittels des Erweiterungssystems 36 ist nun ein erstes Wechselrichterschnittstellenmodul 24 mit dem Steuerungsmodul 22 verbunden. Das Wechselrichterschnittstellenmodul 24 weist eine Wechselrichterschnittstelle 24a auf, mittels welcher Stellwerte an den Wechselrichter 40 ausgegeben werden. Die Wechselrichterschnittstelle 24a wird dabei derart ausgewählt, dass sie zu dem anzusprechenden Wechselrichter 40 passt. Es handelt sich somit um eine wechselrichterspezifische Schnittstelle 24a. In der gezeigten Form handelt es sich bei dem Wechselrichterschnittstellenmodul 24 um ein Ausgabemodul, da die Stellwerte an den Wechselrichter 40 übertragen werden.

Benachbart zum Steuerungsmodul 22 ist ein Fernwirksignalmodul 25 angeordnet. Das Fernwirksignalmodul 25 umfasst eine Fernwirksignalschnittstelle 25a, an der das Fernwirksignal 104 mit den Sollwerten eingeht. Das Fernwirksignalmodul 25 leitet das Fernwirksignal zur weiteren Verarbeitung an das Steuerungsmodul 22 weiter. Bei dem Fernwirksignalmodul 25 handelt es sich um ein Eingabemodul, da das Fernwirksignalmodul 25 das Fernwirksignal 104 empfängt.

Die EZR 20 umfasst ferner ein Messmodul 26 mit einer Messwertschnittstelle 26a. Die IST-Werte der Anlagenparameter werden auf geeignete Weise an das Messmodul 26 zur weiteren Verarbeitung in dem Steuerungsmodul 22 übertragen.

Noch ferner umfasst die EZR 20 ein Kommunikationsmodul 27 mit einer Kommunikationsschnittstelle 27a. In der gezeigten Ausführungsform werden Rückmeldedaten 106 an den Netzbetreiber 110 gesendet, also beispielsweise die IST-Werte der Anlagenparameter.

Die EZR 20 mit den wie in dem Ausführungsbeispiel dargestellten Modulen 22, 25, 26, 27 ist somit eine integrierte Energieerzeugungsanlagenregelung 20, wobei alle wesentlichen Regelungs- und Schnittstellenkomponenten in einem gemeinsamen Schaltkasten 21 angeordnet sind. Die integrierte EZR 20 hat den Vorteil, dass alle Komponenten an einem Ort zugänglich sind, in einem Wartungs- oder Modifikationsfall ein Techniker daher an einem zentralen Ort alle Einstellungen oder Änderungen vornehmen kann. Darüber hinaus können die Komponenten optimal aufeinander abgestimmt werden, so dass Verluste, die evtl. durch eine fehlerhafte Umsetzung der Regelungssignale durch externe Komponenten, bspw. direkt am Wechselrichter, auftreten können, gesenkt oder vermieden werden können. Schließlich gewährleisten die kurzen Kommunikationswege zwischen den Modulen 22, 25, 26, 27 äußerst kurze Übermittlungszeiten der entsprechenden Signale, so dass zügig auf jede Änderung der Umgebungsbedingungen reagiert werden kann. Dies ist besonders interessant bei regenerativer Energieerzeugung 12 wie beispielsweise Windstrom 12e, Sonnenstrom oder auch Strom aus einem Biomassekraftwerk 12b, da hier die Stromerzeugung empfindlich von den Umgebungsbedingungen abhängt und die optimalen Kennwerte der Stromerzeugung ständig angepasst, d.h. geregelt werden können.

Ein weiteres Erweiterungsmodul 28 symbolisiert die Flexibilität der vorgestellten EZR 20. Nahezu beliebige Funktionsmodule lassen sich vorwiegend als Schnittstellenmodule mit dem Steuerungsmodul 22 koppeln um den vom Anwender gewünschten Funktionsumfang zu realisieren. In der gezeigten Form handelt es sich bei dem Erweiterungsmodul 28 um ein Ein-/Ausgabemodul, da sowohl Daten empfangen als auch gesendet werden können.

Die komplette EZR 20 ist in Fig. 4 auf einer gemeinsamen Hutschiene 32 montiert, also aufgerastet.

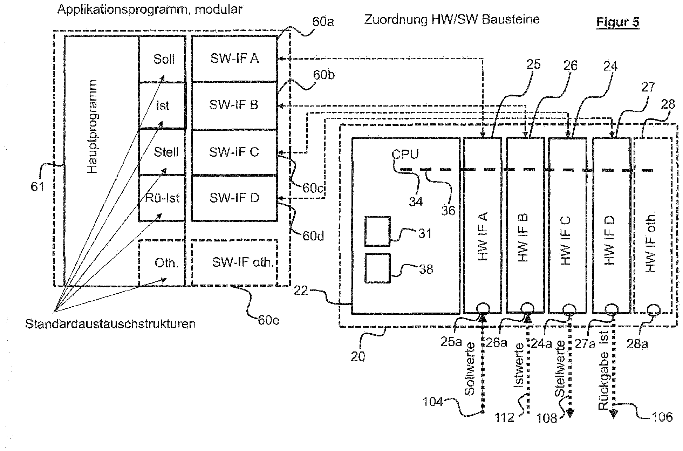

Figur 5 zeigt die Wechselwirkung der Programmbausteine 60 mit den jeweiligen Erweiterungsmodulen 24, 25, 26, 27, 28. So gibt es Programmbausteine 60 die jeweils genau einem Erweiterungsmodul 24, 25, 26, 27, 28 zugeordnet sind, um die entsprechend gewünschte Funktion auszuführen. Weitere Programmbausteine können das Hauptprogramm 61 umfassen, welches ähnlich eines Betriebssystems die Kommunikation mit der Systemarchitektur (CPU 34, Speicher 38, externe Kommunikationsschnittstelle 31, etc.) gewährleistet.

Das Hauptprogramm 61 kann zur Gewährleistung einer auch softwareseitig implementierten Modularität des Gesamtsystems Standardaustauschstrukturen aufweisen zur internen Kommunikation bzw. zum Datenaustausch des Hauptprogramms 61 mit Programmbausteinen 60a, 60b, 60c, 60d, 60e. Mit anderen Worten kann das Hauptprogramm 61 mit den vorgefertigten Standardaustauschstrukturen standardisiert im Steuerungsmodul 22 vorinstalliert sein und je nach Zufügung weiterer Erweiterungsmodule 24, 25, 26, 27, 28 die Programmbausteine 60a, 60b, 60c, 60d, 60e in das Steuerungsmodul 22 geladen werden.

Bei einem beispielhaften Signalverlauf kann von dem Fernwirksignal 104 und/oder dem Messwertsignal 112 ausgegangen, welches alternativ oder kumulativ zueinander von dem Steuerungsmodul 22 verarbeitet wird. Dem Fernwirksignalmodul 25 ist dabei ein Programm- oder Softwarebaustein 60a zugeordnet, mittels welchem das erhaltene Fernwirksignal 104 verarbeitet wird. Dem Messwertmodul 26 ist ein Programmbaustein 60b zugeordnet, mittels welchem die Messwertsignale 112 verarbeitet werden.

Eine Wechselwirkung mit dem Hauptprogramm 61 ermöglicht beispielsweise das Zugreifen auf in dem Programmspeicher 38 abgelegte vordefinierte Daten. Solche vordefinierte Daten umfassen beispielsweise die Verteilnetzbetreibervorgabe in Form einer Kennlinie oder die einzuhaltenden Grenzwerte der Anlagenparameter.

Aus dem Verarbeitungsergebnis des Fernwirksignalprogrammbausteins 60a und/oder dem Verarbeitungsergebnis des Messwertsignalprogrammbausteins 60b wird ein Steuersignal erzeugt und an den Wechselrichterschnittstellenprogrammbaustein 60c übergeben. Der Wechselrichterschnittstellenprogrammbaustein 60c übersetzt das Steuersignal, so dass es zu dem Typ des Wechselrichters 40 passt, also beispielsweise mit dem korrekten Kommunikationsprotokoll. Dieses korrigierte Steuersignal wird an das Wechselrichterschnittstellenmodul 24 übertragen und schließlich mittels der Wechselrichterschnittstelle 24a an den Wechselrichter 40 übertragen.

Das Verarbeitungsergebnis des Fernwirksignalprogrammbausteins 60a und/oder das Verarbeitungsergebnis des Messwertsignalprogrammbausteins 60b kann ferner an den Rückmeldeprogrammbaustein 60d übergeben werden, welcher ein Rückmeldesignal 106 für den Verteilnetzbetreiber 110 erzeugt. Das Rückmeldesignal 106 kann dann mittels des Kommununikationsmoduls 27 und der zugehörigen Kommunikationsschnittstelle 27a an den Verteilnetzbetreiber 110 übertragen werden.

Weitere Programmbausteine 60e können übrigen Erweiterungsmodulen 28 zugeordnet werden, um entsprechende Funktionen auszuführen. Beispielsweise kann der weitere Programmbaustein 60e ein zweiter Wechselrichterschnittstellenprogrammbaustein 60e sein, der ein zweites Wechselrichterschnittstellenmodul 28 anspricht zum Steuern eines zweiten Wechselrichters 40, 40a, 40b, 40c, 40d, 40e.

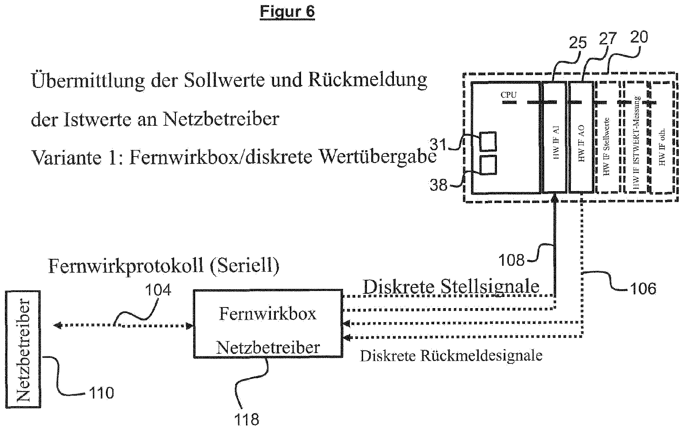

Figur 6 zeigt eine weitere Möglichkeit der Kommunikationsverbindung der EZR 20 mit dem Verteilnetzbetreiber 110 zum Übertragen des Fernwirksignals 104. Verteilnetzbetreiberseitig werden die Sollwerte über ein in diesem Fall serielles Fernwirkprotokoll an eine Fernwirkbox 118 kabelgebunden oder drahtlos übermittelt, die IST-Werte können ebenfalls über das Fernwirkprotokoll übertragen werden. Anlagenseitig werden die Vorgabewerte an die EZR 20 in einer anderen Signalform weitergegeben. Mit anderen Worten übersetzt die Fernwirkbox 118 die Signale vom Fernwirkprotokoll in ein Anlagenprotokoll.

Anlagenseitig können die Vorgabewerte beispielsweise als proportionales analoges Signal an das ein- oder mehrkanalige Fernwirksignalmodul 25 übertragen werden. Ein proportionales analoges Signal kann auch von dem Kommunikationsmodul 27 an die Fernwirkbox 118 übertragen werden.

Anlagenseitig können die Vorgabewerte auch als bitcodiertes digitales Signal in definierbaren Stufen an ein geeignetes mehrkanaliges digitales Fernwirksignalmodul 25 übertragen werden. Die Übertragungsform ist von dem Verteilnetzbetreiber 110 bekannt gegeben, so dass das entsprechend einzusetzende Erweiterungsmodul ausgewählt und in der EZR 20 eingesetzt werden kann.

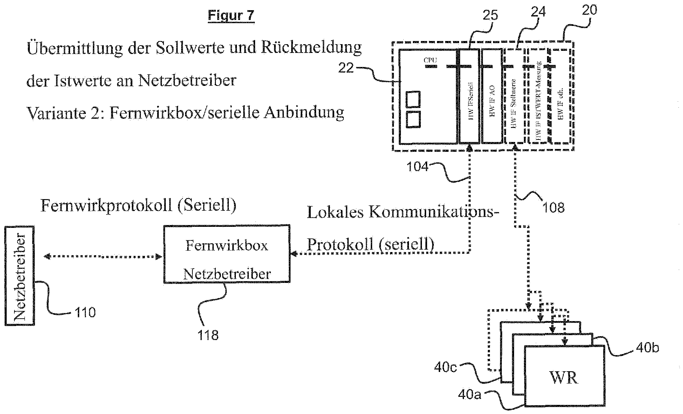

Figur 7 zeigt eine weitere Variante der Kommunikation mit dem Verteilnetzbetreiber 110. Der Netzbetreiber 110 tauscht in diesem Fall die Daten über ein serielles Fernwirkprotokoll mit der Fernwirkbox 118 aus.

Anlagenseitig wird ein lokales Kommunikationsprotokoll, beispielsweise ebenfalls ein serielles, eingesetzt. Das eingesetzte Erweiterungsmodul, nämlich das Fernwirksignalmodul 25 der EZR 20, ist in dieser Variante dazu hergerichtet, sowohl Eingabe- als auch Ausgabedaten weiterzuleiten, kann also nicht nur das Fernwirksignal 104 empfangen, sondern auch die IST-Anlagenwerte 106 an die Fernwirkbox 118 übertragen.

Die Regel/Steuercharakteristik zur Anpassung der dezentralen EZA 10 an das Versorgungsnetz 100 kann dabei vom Versorgungsnetzbetreiber 110, an dessen Versorgungsnetz 100 die dezentrale Energieerzeugungsanlage 10 angeschlossen ist, in seinen Anschlussbedingungen festgelegt werden.

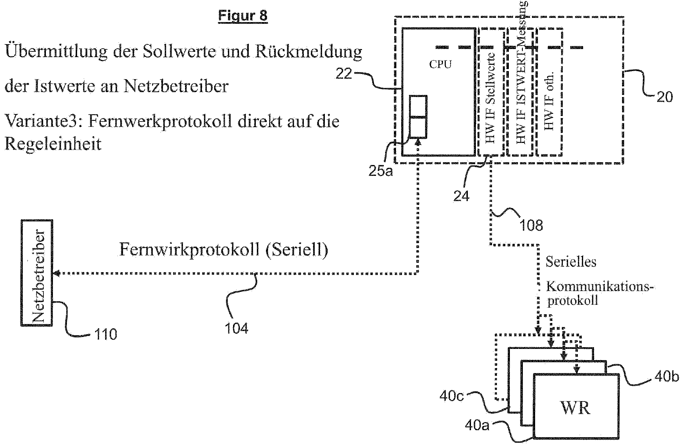

Im in Figur 8 gezeigten Beispiel kommunizieren Verteilnetzbetreiber 110 und EZR 20 schließlich unmittelbar miteinander. Die EZR 20 ist in diesem Beispiel daher dazu hergerichtet, unmittelbar in das eingesetzte Fernwirkprotokoll übersetzte Daten zu empfangen und zu senden. In der hier gezeigten Form ist es sogar denkbar, das Fernwirksignalmodul 25 gänzlich einzusparen und die Fernwirksignalschnittstelle 25a an dem Steuerungsmodul 22 anzuordnen. Dies erscheint möglich und sinnvoll, sofern sich die verschiedenen Verteilnetzbetreiber 110 auf einen Kommunikationsstandard einigen könnten und keine verschiedenen Fernwirksignalmodule 25 mehr benötigt würden.

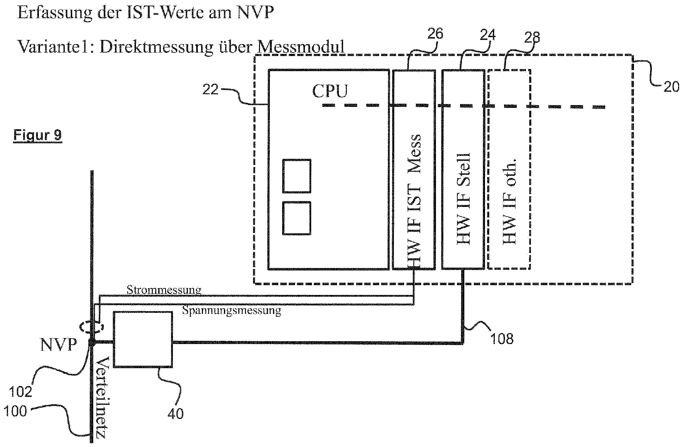

Figur 9 zeigt eine Variante der EZR 20, bei welcher kein Fernwirksignal 104 vom Verteilnetzbetreiber 110 übertragen wird. Vielmehr werden am Netzverknüpfungspunkt 102 die Parameter des Verteilnetzes 100 sowie die Anlagenparameter, beispielsweise Strom, Spannung, Phase gemessen und die Messwerte an das Messwertmodul 26 übertragen. Das Messwertmodul gibt die Daten an das Steuerungsmodul 22 weiter, wo diese mittels der CPU 34 und den Programmbausteinen 60 verarbeitet werden um die relevanten Größen wie beispielsweise Leistung P, Frequenz f, Blindleistung Q, Phase etc. zu erhalten. Mit Hilfe der relevanten Größen kann ein Steuersignal erzeugt werden, an das Wechselrichterschnittstellenmodul 24 übertragen und schließlich dem Wechselrichter 40 zugeführt werden.

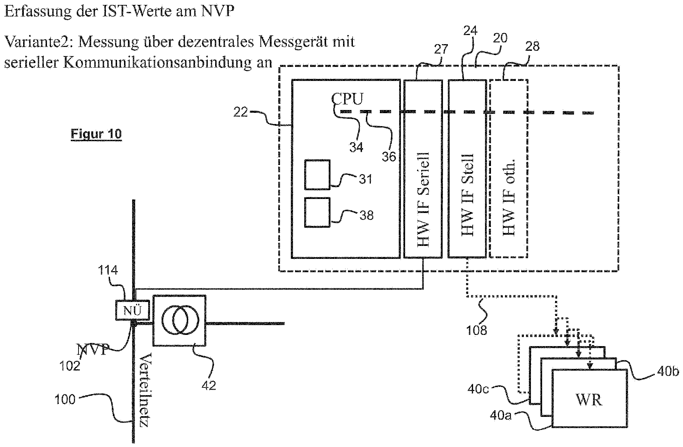

Figur 10 zeigt noch eine weitere Form des EZR 20, bei welchem kein Fernwirksignal 104 eingesetzt wird. Am Netzverknüpfungspunkt 102 werden die relevanten Größen gemessen, jedoch mittels der dezentralen Netzüberwachung 114, wobei an die EZR 20 die bereits verarbeiteten Messergebnisse übermittelt und von dem Messmodul 26 empfangen werden. Im Unterschied zu Fig. 9 zeigt Fig. 10 eine Ausführungsform mit Teilgeneratoren, so dass mehrere Wechselrichter 40, 40a, 40b, 40c von dem ersten und ggf. den zweiten Wechselrichterschnittstellenmodulen 24 ihre Steuersignale erhalten, um die Anlagenparameter entsprechend den Vorgaben anzupassen.

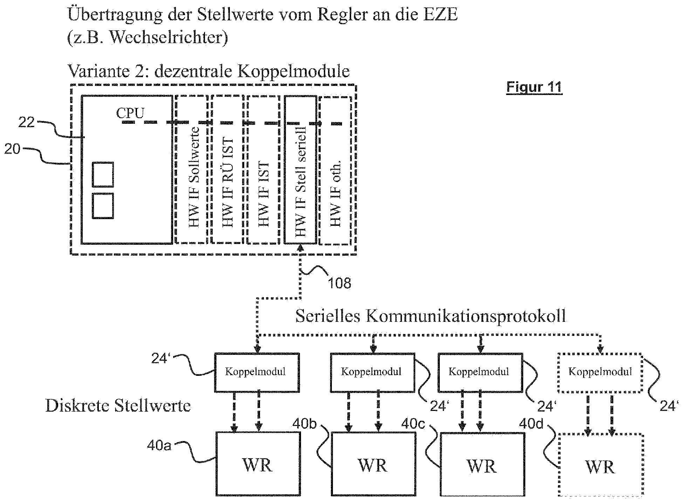

Figur 11 zeigt schließlich eine Ausführungsform des EZR 20, bei welchem die Wechselrichter 40, 40a, 40b, 40c, 40d verteilt angeordnet sind und als "Koppelmodul" jedem Wechselrichter ein dezentrales zweites Wechselrichterschnittstellenmodul 24' zugeordnet ist. Mit anderen Worten handelt es sich bei den Koppelmodulen um Wechselrichterschnittstellenmodule 24', die nicht unmittelbar benachbart zu dem Steuerungsmodul 22 angeordnet sind, sondern über eine Datenverbindungsleitung 30 mit dem Steuerungsmodul 22 kommunizieren. Hierbei kann es sich wie in diesem Beispiel um ein serielles Kommunikationsprotokolls zum Ansprechen der Koppelmodule 24' handeln. Die Stellwerte werden also über den Wechselrichtern 40 insbesondere örtlich zugeordnete zweite Wechselrichterschnittstellenmodule 24' an die Wechselrichter 40, 40a, 40b, 40c, 40d übermittelt.

Die zweiten Wechselrichterschnittstellenmodule 24' können ggf. die Stellgrößen über ein serielles Kommunikationsprotokoll empfangen und lokal in diskrete Stellgrößen übersetzen, z.B. ein analoges Normsignal, welches auf Analogeingänge an den Wechselrichtern 40, 40a, 40b, 40c, 40d aufgelegt wird. In dieser Ausführungsform sorgt ein an das Kommunikationsprotokoll, an den Parametersatz des Wechselrichters sowie das Wechselrichterschnittstellenmodul 24 angepasster Software- oder Programmbaustein 60 für die Datenübergabe über die Standarddatenaustauschstruktur an das Hauptprogramm. Ggf. können die Koppelmodule einen Rückkanal bieten, um vom Wechselrichter Daten zum EZR 20 für Diagnose- oder Einstellzwecke zu übertragen.

Der vorliegende EZA-Regler 20 kann also zusammenfassend um Schnittstellen und Funktionen ergänzt werden, um entsprechend der jeweiligen Applikationsanforderungen angepasst werden zu können. Durch Bereitstellung einer Basisfunktion in Hardware (HW) und Software (SW) kann dies insofern realisiert werden, die kritischen und ggf. zulassungsrelevanten Reglerfunktionen bereitzustellen. Ein geschulter Anwender kann basierend auf einem Baukastensystem von HW und SW Modulen die Grundfunktion des Reglers modular um Schnittstellen ergänzen und anpassen, ohne dass die grundlegende Funktion des Reglers verändert werden muss.

Die Erweiterungen der Grundfunktion betreffen insbesondere die HW Schnittstellen 24, 25, 26, 27, 28 und die SW Schnittstellen60, 60a, 60b, 60c, 60d, 60e zum Einlesen von ISTWerten der Regelgröße, zum Einlesen externer Vorgabewerte für diese Regelgröße sowie zur Ausgabe der Stellwerte in die Regelstrecke. So können z.B. in einer Grundausführung die beschriebenen Schnittstellen als analoge Eingabe und Ausgabeschnittstellen ausgeführt sein.

Eine weitere Optimierung des Systems ist eine überlagerte Gesamtregelung von unterschiedlichen für sich geregelten
Teilanlagen 12a, 12b, 12c, 12d, 12e. Soll die Erfassung der SOLL, Erfassung der IST und die Übermittlung der Stellwerte 108 über andere als analoge Schnittstellen erfolgen, so wird die Grundfunktion des Reglers 20 beibehalten und es findet lediglich eine Anpassung der HW-Module 24, 25, 26, 27, 28 und der Schnittstellen Bausteine 60, 60a, 60b, 60c, 60d, 60e statt.

Durch die modulare Erweiterbarkeit kann der EZR-Regler 20 individuell an die jeweilige Applikation angepasst werden. Auch ein Mischbetrieb verschiedener Energieerzeugungsanlagentypen (z.B. Wind, Solar, Diesel) 12a, 12b, 12c, 12d, 12e und auch die Kombination mit Energiespeichern (Batteriesystemen) ist so möglich.

Die grundlegende Reglerfunktion kann in besonders vorteilhafter Ausführung über eine anmelderseitig herstellbare SPS 22 (SpeicherProgrammierbare Steuerung - Englisch: PLC Programmable Logic Controller) bereitgestellt werden, für die eine Grundprogrammierung ebenfalls bereitgestellt wird. Abhängig von den benötigten Hardwareschnittstellen für seine Gesamtanwendung, z.B.
abhängig von den Schnittstellen der anzusteuernden Wechselrichter (z.B. RS485 Kommunikationsprotokoll),
der auszulesenden Messtechnik (z.B. Leistungsmesser mit S0-Ausgang) und der anzukoppelnden übergeordneten Leitebene für die Sollwertvorgabe (z.B. Fernwirkprokoll) wählt der Anwender die notwendigen HW-Schnittstellenmodule aus und ergänzt die SPS 22 um diese Module 24, 25, 26, 27, 28, bzw. schaltet diese Schnittstellen in der SPS 22 frei.

Mit den ausgewählten HW-Bausteinen 24, 25, 26, 27, 28 zugeordnete SW-Bausteine 60, 60a, 60b, 60c, 60d, 60e wird in der Programmierumgebung der SPS 22 die Basisprogrammierung der Regelfunktion um die benötigten Schnittstellen ergänzt.

In einer beispielhaften, konkreten Ausführung können beispielsweise Inline Controller der 100er oder 300er Leistungsklasse das Steuerungsmodul 22 bilden, die gemäß IEC 61131 programmiert werden können. Für die Kompaktsteuerungen wird mit der vorliegenden Erfindung ein umfangreiches Portfolio an Erweiterungsmodulen 24, 25, 26, 27, 28 zur Verfügung gestellt, um beispielsweise Eingabe-/Ausgabe-Daten (E/A-Daten) zu erfassen und über unterschiedliche Hardware-Schnittstellen (bspw. 24a, 25a, 26a, 27a) weiterzuleiten.

Aufgrund der Flexibilität auf der Hardware-Seite kann der Anwender die Lösung optimal an die Anforderungen des jeweiligen Projekts anpassen, zum Beispiel hinsichtlich der Ankopplung an Wechselrichter 40 verschiedener Hersteller, Netzanalyse-Systeme oder Fernwirk-Schnittstellen 25a. Sollten im Laufe der Zeit neue Anforderungen auf der Schnittstellenseite entstehen, lassen sich die vorhandenen Anwendungen nachträglich um weitere Module ergänzen oder bestehende gegen neue Komponenten auswechseln.

Die Modularität und Flexibilität der Hardware ist auch auf die Software übertragen worden. Die Anmelderin Phoenix Contact hat hier umfangreiche auf der IEC 61131 basierende Funktionsbaustein-Bibliotheken 60, 60a, 60b, 60c, 60d, 60e insbesondere für Solar-Applikationen entwickelt, die den Engineering-Aufwand des Systemintegrators erheblich reduzieren. Wesentlicher Bestandteil der Lösung ist ebenfalls die Reglerfunktion. Die Bausteine 60 zur Istwert-Erfassung und Sollwert-Übermittlung an die unterschiedlichen Wechselrichter sowie zur Fernwirktechnik des Netzbetreibers koppeln über spezielle definierte Schnittstellen an diese Reglerfunktion an.

Die entwickelte Funktionsbaustein-Bibliothek SolarWorx ermöglicht zum einen die einfache Einbindung fast aller führenden Wechselrichter 40 in die jeweilige Photovoltaik-Anlage 10, 12a. Darüber hinaus sind Kommunikations-Bausteine 60 zur Ankopplung von Leistungsmessgeräten für die Netzüberwachung am Einspeisepunkt erhältlich. Neben den anmelderseitig angebotenen Netzanalysegeräten aus der Produktfamilie EMpro können auch entsprechende Komponenten von Drittanbietern unterstützt werden. Ein Hauptaugenmerk liegt dabei auf der Integration Modbus-basierter Kommunikationsprotokolle, die im Solarumfeld große Verbreitung finden. Die Arbeit des Programmierers beschränkt sich also weitgehend auf die Verknüpfung vorgetesteter Software-Bausteine 60. Die Feinparametrierung beispielsweise hinsichtlich der Regelparameter kann dann in der Anlage über Web-basierte Bedienoberflächen erfolgen, die besonders auf die Regelbausteine abgestimmt werden können.

Das optimal aufeinander aufbauende Portfolio an Hard- und Software-Komponenten kann somit den Engineering-Aufwand für den Systemintegrator senken. Trotzdem erhält er eine weitreichende Flexibilität im Hinblick auf die zu unterstützenden Schnittstellen. Auf diese Weise lässt sich der Einsatz zusätzlicher Kommunikations-Gateways - beispielsweise zur Anpassung an das Fernwirkprotokoll des jeweiligen Netzbetreibers - in vielen Fällen vermeiden. Denn diese Funktion kann die Regler-Steuerung selbst übernehmen. Zudem eröffnet die Nutzung SPSbasierter EZA-Regler 20 die Möglichkeit, auch hybride dezentrale Energieerzeugungs-Anlagen 10 zu regeln, in denen verschiedene EZE-Technologien (EZE - Energieerzeugungseinrichtung) wie Wind und Photovoltaik miteinander kombiniert sind. Bei Bedarf können ggf. auch Energiespeichersysteme in derartige Lösungen integriert werden.

In seinen Netzanschlussbedingungen gibt der zuständige Netzbetreiber typischerweise für jede EZA die einzuhaltenden Bereiche für Netzfrequenz und -spannung sowie die Blindleistungsfahrweise vor. Diese Richtwerte beziehen sich zumeist auf den Netzverknüpfungspunkt 102 und nicht auf die Wechselspannungs-Anschlussseite der in der Anlage verbauten Energieerzeugungs-Einheiten (EZE), also beispielsweise der Wechselrichter 40. EZA-Regler (Energieerzeugungsanlagen-Regler) setzen die Anforderungen in großen Photovoltaik-Anlagen 10 am Mittelspannungsnetz um. Sie erfassen die am Netzverknüpfungspunkt vorliegende Spannung und Blindleistung über entsprechende Messtechnik. Anschließend ermitteln die EZA-Regler 20 auf Basis der Abweichung zu den Vorgaben des Netzbetreibers 110, die entweder als Kennlinie vorhanden sind oder per externe Sollvorgabe erfolgen, die notwendigen Regelwerte für die Wechselrichter. Durch den geschlossenen Regelkreis werden parkinterne Impedanzen kompensiert. Bezogen auf den Netzverknüpfungspunkt der Energieerzeugungs-Anlage müssen bestimmte Bedingungen für die eingespeiste Wirk- und Blindleistung eingehalten werden, die von externen Vorgaben oder der in der Anlage hinterlegten Kennlinie abhängig sind. EZA-Regler erfassen deshalb an den Netzverknüpfungspunkten die vorliegende Spannung sowie Blindleistung und ermitteln dann die jeweiligen Regelwerte für die Wechselrichter. Eine Hard- und Softwarebasierte Lösung von Phoenix Contact sorgt dafür, dass der Engineering-Aufwand gering bleibt.

Im Rahmen der vorliegenden Beschreibung kann ein Verfahren zum Regeln von dezentralen Energieerzeugungsanlagen (10) mit den Schritten gezeigt sein mit den Schritten Empfangen von Steuerbefehlen (104) und/oder Messen von Versorgungsnetzparametern (112), Verarbeiten der empfangenen Steuerbefehle (104) und/oder der gemessenen Versorgungsnetzparameter (112), Erstellen von Steuersignalen (108) in Ansprechen auf die empfangenen Steuerbefehle (104) und/oder der gemessenen Versorgungsnetzparameter (112) zum Steuern eines ersten Wechselrichters (40), Übertragen der erstellten Steuersignale (108) an eine Wechselrichterschnittstelle (24a) zur Ausgabe an einen ersten Wechselrichter (40), - Anpassen von Anlagenparametern, insbesondere der Leistungsabgabe, der dezentralen Energieerzeugungsanlage (10) mittels des ersten Wechselrichters (40) in Ansprechen auf die von der Wechselrichterschnittstelle (24a) empfangenen Steuersignale (108).

Bevorzugt kann in der vorliegenden Beschreibung gezeigt sein, dass das Verfahren ferner die Schritte aufweist Erstellen von zweiten Steuersignalen (108) zum Steuern zumindest eines von dem ersten Wechselrichter (40) verschiedenartigen zweiten Wechselrichters (40a, 40b, 40c, 40d), Übertragen der erstellten Steuersignale (108) an eine zweite Wechselrichterschnittstelle (24'a) zur Ausgabe der Steuersignale (108) an den zweiten Wechselrichter (40a, 40b, 40c, 40d), und Anpassen der Anlagenparameter, insbesondere der Leistungsabgabe, der dezentralen Energieerzeugungsanlage (10) mittels des ersten und des zweiten Wechselrichters (40, 40a, 40b, 40c, 40d) in Ansprechen auf die jeweils von der Wechselrichterschnittstelle (24a, 24'a) empfangenen Steuersignale.

Weiter bevorzugt kann in der vorliegenden Beschreibung gezeigt sein, dass das Verfahren so ausgestaltet ist,
dass der zweite Wechselrichter (40a, 40b, 40c, 40d) von dem ersten Wechselrichter (40) verschiedenartig ist und/oder der zweite Wechselrichter (40a, 40b, 40c, 40d) in einer zweiten dezentralen Energieerzeugungsanlage (10') angeordnet ist und der erste (40) und der zweite Wechselrichter (40a, 40b, 40c, 40d) gleichzeitig gesteuert werden zur Anpassung der Anlagenparameter des oder der dezentralen Energieerzeugungsanlage(n) (10, 10') an die Versorgungsnetzparameter (112).

In der vorliegenden Beschreibung kann eine modulare Energieerzeugungsanlagenregelung (20) beschrieben sein zur Regelung dezentraler Energieerzeugungsanlagen (10), wobei die dezentrale Energieerzeugungsanlage (10) einen ersten Wechselrichter (40) umfasst, mit einem programmierbaren Steuerungsmodul (22) zur Erzeugung von wechselrichterspezifischen Steuersignalen (108) zum Steuern des ersten Wechselrichters (40), einen Programmspeicher (38) des Steuerungsmoduls (22) für ein Steuerungsprogramm (60, 60a, 60b, 60c, 60d, 60e, 61), ein Erweiterungssystem (36) zum modularen Ergänzen von Erweiterungsmodulen (24, 24', 25, 26, 27, 28) an das programmierbare Steuerungsmodul (22), und ein mit dem programmierbaren Steuerungsmodul (22) koppelbares erstes Erweiterungsmodul (24) mit zumindest einer Wechselrichterschnittstelle (24a) als Wechselrichterschnittstellenmodul zur Herstellung der Verbindung mit dem zumindest einen Wechselrichter (40) und zur Ausgabe der wechselrichterspezifischen Steuersignale (108) an den Wechselrichter (40) über die Wechselrichterschnittstelle (24a).

Bevorzugt kann in der vorliegenden Beschreibung die modulare Energieerzeugungsanlagenregelung gezeigt sein, bei welcher ferner ein zweites Erweiterungsmodul (24', 28) vorgesehen ist, wobei das zweite Erweiterungsmodul (24', 28) ein zweites Wechselrichterschnittstellenmodul mit zumindest einer Wechselrichterschnittstelle (24'a) zur Herstellung der Verbindung mit einem zweiten Wechselrichter (40a, 40b, 40c, 40d), der insbesondere verschiedenartig von dem ersten Wechselrichter (40) ist, und zur Ausgabe der wechselrichterspezifischen Steuersignale (108) an den zweiten Wechselrichter (40a, 40b, 40c, 40d) über die Wechselrichterschnittstelle (24'a) des zweiten Wechselrichterschnittstellenmoduls (24', 28) umfasst.

Weiter bevorzugt kann in der vorliegenden Beschreibung die modulare Energieerzeugungsanlagenregelung gezeigt sein, bei welcher das zweite Erweiterungsmodul (24', 25, 26, 27, 28) ein Fernwirksignalmodul (25) mit einer Fernwirksignalschnittstelle (25a) ist zum Empfangen von Steuerbefehlen (104) und zum Weiterleiten der Steuerbefehle (104) an das Steuerungsmodul (22) und/oder ein Messmodul (26) zum Erfassen von Anlagen- und/oder Verteilnetzparameter (112) und/oder ein Kommunikationsmodul (27) zum Auslesen von Anlagenmessgeräten (114).

Bevorzugt kann in der vorliegenden Beschreibung die modulare Energieerzeugungsanlagenregelung gezeigt sein, bei welcher das Erweiterungssystem (26) eine Datenverbindungsleitung zum Austausch von Daten zwischen dem Steuerungsmodul (22) und dem ersten (24) und/oder dem zweiten Erweiterungsmodul (24', 25, 26, 27, 28) umfasst.

In der vorliegenden Beschreibung kann die modulare Energieerzeugungsanlagenregelung weiter dahingehend gezeigt sein, dass das Steuerungsmodul (22) und das erste Erweiterungsmodul (24) in einem gemeinsamen Steuerkasten (21) angeordnet sind.

Bevorzugt kann in der vorliegenden Beschreibung die modulare Energieerzeugungsanlagenregelung gezeigt sein, bei welcher das Steuerungsmodul (22), das erste Erweiterungsmodul (24) und/oder das zweite Erweiterungsmodul (24', 25, 26, 27, 28) in einem gemeinsamen Steuerkasten (21) benachbart nebeneinander angeordnet sind und mittels einer Steckbusverbindung miteinander gekoppelt sind und insbesondere auf einer gemeinsamen Hutschiene (32) angebracht sind.

In der vorliegenden Beschreibung kann die modulare Energieerzeugungsanlagenregelung auch dergestalt gezeigt sein, dass das Steuerungsmodul (22) und das zumindest eine Erweiterungsmodul (24) in einem zentralen Schaltschrank (21 und 14) der Energieerzeugungsanlage (10) angeordnet sind.

Bevorzugt kann in der vorliegenden Beschreibung die modulare Energieerzeugungsanlagenregelung gezeigt sein, bei welcher das erste Wechselrichterschnittstellenmodul (24) mit dem ersten Wechselrichter (40) der dezentralen Energieerzeugungsanlage (10) verbunden ist und das zweite Wechselrichterschnittstellenmodul (24', 28) mit einem zweiten von dem ersten Wechselrichter (40) verschiedenartigen Wechselrichter (40a, 40b, 40c, 40d) der dezentralen Energieerzeugungsanlage (10) verbunden ist und/oder zumindest eine weitere dezentrale Energieerzeugungsanlage (10') von dem einen Steuerungsmodul (22) gemeinsam mit der dezentralen Energieerzeugungsanlage (10) geregelt wird, wobei das zweite Wechselrichterschnittstellenmodul (24', 28) mit dem Wechselrichter (40a, 40b, 40c, 40d) der weiteren dezentralen Energieerzeugungsanlage (12a, 12b, 12c, 12d, 12e, 12f) verbunden ist.

In der vorliegenden Beschreibung kann die modulare Energieerzeugungsanlagenregelung auch so beschrieben sein, dass das zumindest eine weitere Erweiterungsmodul (24', 25, 26, 27, 28) in einem zweiten Steuerkasten (31) angeordnet ist, wobei das Erweiterungssystem (26) eine Datenverbindungsleitung zum Austausch von Daten zwischen dem Steuerungsmodul (22) und dem zweiten Erweiterungsmodul (24', 25, 26, 27, 28) umfasst und
wobei das Steuerungsmodul (22) über die Datenverbindungsleitung mit dem zweiten Erweiterungsmodul (24', 25, 26, 27, 28) Daten austauscht.

Bevorzugt kann in der vorliegenden Beschreibung die modulare Energieerzeugungsanlagenregelung gezeigt sein, bei welcher das Steuerungsprogramm (60, 60a, 60b, 60c, 60d, 60e, 61) ein Hauptprogramm (61) umfasst und
wobei das Hauptprogramm (61) Standardaustauschstrukturen zur internen Kommunikation mit modular einsetzbaren Programmbausteinen (60a, 60b, 60c, 60d, 60e) aufweist.

In der vorliegenden Beschreibung kann die modulare Energieerzeugungsanlagenregelung in dem Programmspeicher (38) des Steuerungsmoduls (22) vordefinierte Softwarebausteine (60, 60a, 60b, 60c, 60d, 60e, 61) abgelegt aufweisen und wobei die vordefinierten Softwarebausteine dazu ausgelegt sind, mit dem ersten Erweiterungsmodul (24) und/oder dem weiteren Erweiterungsmodul (24', 25, 26, 27, 28) zu kommunizieren.

In der vorliegenden Beschreibung kann dezentrale Energieerzeugungsanlage elektrische Leistung bereitstellende Generatoren umfassen, insbesondere Photovoltaikmodule, Windkraftgeneratoren, Biomasseanlagen und/oder Blockheizkraftwerke, sowie einen ersten Wechselrichter (40) zum Anpassen von elektrischen Parametern des elektrischen Netzes der dezentralen Energieerzeugungsanlage (10) an dasjenige des Versorgungsnetzes (100), und eine modulare Energieerzeugungsanlagenregelung (20), wie sie vorstehend ausführlich erläutert wurde, zum Regeln von Parametern, insbesondere der Abgabeleistung, der dezentralen Energieerzeugungsanlage (10).

Die vorliegende Anmeldung ist eine Teilanmeldung der europäischen Patentanmeldung EP 15 724 256.1 (publiziert als EP 3 146 606 A1), welche wiederum die Priorität der deutschen Patentanmeldung DE 10 2014 107 115.8 in Anspruch nimmt, wobei beide früheren Anmeldungen in ihrer jeweils eingereichten Fassung hiermit durch Referenz in Gänze inkorporiert werden. Die Anmelderin behält sich das Recht vor Änderungen jederzeit auf einen der in EP 15 724 256.1 (publiziert als EP 3 146 606 A1) oder DE 10 2014 107 115.8 beschriebenen oder beanspruchten Gegenstände zu stützen und ggf. diese zu beansprucht, und zwar in der vorliegenden Teilanmeldung wie auch in einer oder mehrerer folgenden Teilanmeldungen, wenn dies geplant sein sollte, unabhängig von den in der vorliegenden Teilanmeldung beanspruchten Gegenständen.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

### Bezuqszeichenliste:

- 10: Energieerzeugungsanlage (EZA)
- 12: Teilgenerator
- 12a: Teilgenerator, Photovoltaikgenerator
- 12b: Teilgenerator, Blockheizkraftwerk
- 12c: Teilgenerator, Dieselgenerator
- 12d: Teilgenerator, Pufferspeicher (Batteriesystem)
- 12e: Teilgenerator, Windkraftanlage
- 14: Generatoranschlusskasten
- 20: Energieerzeugungsanlagenregler (EZR)
- 21: Schaltkasten
- 22: Steuerungsmodul
- 24: Wechselrichterschnittstellenmodul
- 24': zweites Wechselrichterschnittstellenmodul
- 24a: Wechselrichterschnittstelle
- 24'a: Wechselrichterschnittstelle
- 25: Fernwirksignalmodul
- 25a: Fernwirksignalschnittstelle
- 26: Messmodul
- 26a: Messwertschnittstelle
- 27: Kommunikationsmodul
- 27a: Kommunikationsschnittstelle
- 28: weiteres Erweiterungsmodul, zweites Wechselrichterschnittstellenmodul,
- 28a: zweite Wechselrichterschnittstelle
- 31: Kommunikationsschnittstelle, Ethernetschnittstelle
- 32: Hutschiene
- 34: Prozessor (CPU)
- 36: Erweiterungssystem
- 38: Programmspeicher
- 40: Wechselrichter
- 40a, 40b, 40c: Erster, zweiter bzw. dritter Wechselrichter
- 42: Transformator
- 60: Programmbausteine, 60a, 60b, 60c, 60d, 60e
- 61: Hauptprogramm
- 100: Versorgungsnetz
- 102: Netzverknüpfungspunkt
- 104: Fernwirksignal
- 106: Rückmeldung
- 108: Stellsignal, Steuersignal
- 110: Netzbetreiber
- 112: Messsignal
- 114: Netzüberwachung

## Patentansprüche

1. Verfahren zum Einrichten einer Energieerzeugungsanlagenregelung (EZR) zum Regeln von dezentralen Energieerzeugungsanlagen mit den Schritten:
- Ablegen eines Hauptprogramms (61) sowie einer Funktionsbaustein-Bibliothek mit einem oder mehreren vordefinierten Funktionsbausteinen (60, 60a, 60b, 60c, 60d, 60e) in einem Steuerungsmodul (22) der EZR,
- Zuordnen eines ersten Funktionsbausteins (60a, 60b) zu einer Fernwirksignalschnittstelle (25a) und/oder zu einer Messwertschnittstelle (26a) der EZR,
- Zuordnen eines zweiten Funktionsbausteins (60c) zu einer Wechselrichterschnittstelle (24a, 24'a) der EZR,
- wobei das Hauptprogramm Standardaustauschstrukturen aufweist zum Datenaustausch des Hauptprogramms mit den Funktionsbausteinen.

2. Verfahren nach dem vorstehenden Anspruch, ferner mit dem Schritt Zuordnen zumindest eines weiteren Funktionsbausteins (60, 60d, 60e) zu einem Erweiterungsmodul und/oder einer weiteren Schnittstelle (24'a).

3. Verfahren nach einem der vorstehenden Ansprüche,
wobei der zweite Funktionsbaustein (60c) und/oder der weitere Funktionsbaustein (60d, 60e) dazu hergerichtet ist, einen empfangenen Steuerbefehl (104) und/oder einen gemessenen Versorgungsnetzparameter (112) zur Erzeugung eines korrigiertes Steuersignals zu übersetzen.

4. Verfahren zum Regeln von dezentralen Energieerzeugungsanlagen (10) mit einer Energieerzeugungsanlagenregelung (EZR), welche insbesondere eingerichtet ist nach einem der vorstehenden Ansprüche, mit den Schritten:
- Empfangen von Steuerbefehlen (104) und/oder Messen von Versorgungsnetzparametern (112),
- Verarbeiten der empfangenen Steuerbefehle (104) und/oder der gemessenen Versorgungsnetzparameter (112) mit einem ersten Softwarebaustein (60a, 60b),
- Erstellen von Steuersignalen (108) in Ansprechen auf die empfangenen Steuerbefehle (104) und/oder der gemessenen Versorgungsnetzparameter (112),
- Übersetzen der erstellten Steuersignale mit einem zweiten Softwarebaustein (60c) zur Erzeugung eines korrigiertes Steuersignals zur Ausgabe des korrigierten Steuersignals an einen ersten Wechselrichter (40) und zum Steuern des ersten Wechselrichters (40),
- Anpassen von Anlagenparametern, insbesondere der Leistungsabgabe, der dezentralen Energieerzeugungsanlage (10) mittels des ersten Wechselrichters (40) in Ansprechen auf die von der Wechselrichterschnittstelle (24a) empfangenen korrigierten Steuersignale.

5. Verfahren nach dem vorstehenden Anspruch,
ferner mit den Schritten
Erstellen von zweiten Steuersignalen (108) und Übersetzen der zweiten Steuersignale mit dem zweiten Softwarebaustein (60c)zur Erzeugung eines korrigierten zweiten Steuersignals zur Ausgabe des korrigierten zweiten Steuersignals an einen von dem ersten Wechselrichter (40) verschiedenartigen zweiten Wechselrichter (40a, 40b, 40c, 40d) und zum Steuern des zweiten Wechselrichters (40).

6. Verfahren nach dem vorstehenden Anspruch, ferner mit den Schritten Anpassen der Anlagenparameter, insbesondere der Leistungsabgabe, der dezentralen Energieerzeugungsanlage (10) mittels des ersten und des zweiten Wechselrichters (40, 40a, 40b, 40c, 40d) in Ansprechen auf die von der jeweiligen Wechselrichterschnittstelle (24a, 24'a) empfangenen ersten und zweiten Steuersignale.

7. Verfahren nach dem vorstehenden Anspruch,
wobei der zweite Wechselrichter (40a, 40b, 40c, 40d) von dem ersten Wechselrichter (40) verschiedenartig ist und/oder
wobei der zweite Wechselrichter (40a, 40b, 40c, 40d) in einer zweiten dezentralen Energieerzeugungsanlage (10') angeordnet ist und
wobei der erste (40) und der zweite Wechselrichter (40a, 40b, 40c, 40d) gleichzeitig gesteuert werden zur Anpassung der Anlagenparameter des oder der dezentralen Energieerzeugungsanlage(n) (10, 10') an die Versorgungsnetzparameter (112).

8. Modulare Energieerzeugungsanlagenregelung (20) zur Regelung dezentraler Energieerzeugungsanlagen (10), wobei die dezentrale Energieerzeugungsanlage (10) einen ersten Wechselrichter (40) umfasst, umfassend:
- ein programmierbares Steuerungsmodul (22) zur Erzeugung von wechselrichterspezifischen Steuersignalen (108) zum Steuern des ersten Wechselrichters (40),
- zumindest eine Wechselrichterschnittstelle (24a) zur Herstellung der Verbindung mit dem zumindest einen Wechselrichter (40) und zur Ausgabe der wechselrichterspezifischen Steuersignale (108) an den Wechselrichter (40) über die Wechselrichterschnittstelle (24a),
- einen Programmspeicher (38) des Steuerungsmoduls (22) mit einem im Programmspeicher abgelegten Steuerungsprogramm (60, 60a, 60b, 60c, 60d, 60e, 61),
- das Steuerungsprogramm (60, 60a, 60b, 60c, 60d, 60e, 61) umfassend ein Hauptprogramm (61) und modular einsetzbare Programmbausteine (60a, 60b, 60c, 60d, 60e), wobei das Hauptprogramm Standardaustauschstrukturen zur internen Kommunikation mit den modular einsetzbaren Programmbausteinen aufweist,
- und ferner zumindest einen vordefinierten Softwarebaustein, wobei der vordefinierte Softwarebaustein dazu ausgelegt ist, mit der zumindest einen Wechselrichterschnittstelle zu kommunizieren.

9. Modulare Energieerzeugungsanlagenregelung (20) nach dem vorstehenden Anspruch, ferner umfassend:
- ein Erweiterungssystem (36) zum modularen Ergänzen von Erweiterungsmodulen (24, 24', 25, 26, 27, 28) an das programmierbare Steuerungsmodul (22),
- ein mit dem programmierbaren Steuerungsmodul (22) koppelbares erstes Erweiterungsmodul (24) mit der Wechselrichterschnittstelle.

10. Modulare Energieerzeugungsanlagenregelung (20) nach einem der beiden vorstehenden Ansprüche,
ferner mit einem zweiten Erweiterungsmodul (24', 28),
wobei das zweite Erweiterungsmodul (24', 28) ein zweites Wechselrichterschnittstellenmodul mit zumindest einer Wechselrichterschnittstelle (24'a) zur Herstellung der Verbindung mit einem zweiten Wechselrichter (40a, 40b, 40c, 40d), der insbesondere verschiedenartig von dem ersten Wechselrichter (40) ist, und zur Ausgabe der wechselrichterspezifischen Steuersignale (108) an den zweiten Wechselrichter (40a, 40b, 40c, 40d) über die Wechselrichterschnittstelle (24'a) des zweiten Wechselrichterschnittstellenmoduls (24', 28) umfasst, oder wobei das zweite Erweiterungsmodul (24', 25, 26, 27, 28)
- ein Fernwirksignalmodul (25) mit einer Fernwirksignalschnittselle (25a) zum Empfangen von Steuerbefehlen (104) und zum Weiterleiten der Steuerbefehle (104) an das Steuerungsmodul (22) und/oder
- ein Messmodul (26) zum Erfassen von Anlagen- und/oder Verteilnetzparameter (112) und/oder
- ein Kommunikationsmodul (27) zum Auslesen von Anlagenmessgeräten (114) umfasst.

11. Modulare Energieerzeugungsanlagenregelung (20) nach einem der vorstehenden Ansprüche,
wobei das Erweiterungssystem (26) eine Datenverbindungsleitung zum Austausch von Daten zwischen dem Steuerungsmodul (22) und dem ersten (24) und/oder dem zweiten Erweiterungsmodul (24', 25, 26, 27, 28) umfasst.

12. Modulare Energieerzeugungsanlagenregelung (20) nach einem der vorstehenden Ansprüche, wobei das Steuerungsmodul (22) und das erste Erweiterungsmodul (24) in einem gemeinsamen Steuerkasten (21) angeordnet sind, wobei insbesondere auch das zweite Erweiterungsmodul (24', 25, 26, 27, 28) in dem gemeinsamen Steuerkasten (21) benachbart neben dem ersten Erweiterungsmodul angeordnet ist, und mittels einer Steckbusverbindung miteinander gekoppelt sind und insbesondere auf einer gemeinsamen Hutschiene (32) angebracht sind.

13. Modulare Energieerzeugungsanlagenregelung (20) nach einem der vorstehenden Ansprüche,
wobei das erste Wechselrichterschnittstellenmodul (24) mit dem ersten Wechselrichter (40) der dezentralen Energieerzeugungsanlage (10) verbunden ist und
wobei das zweite Wechselrichterschnittstellenmodul (24', 28) mit einem zweiten von dem ersten Wechselrichter (40) verschiedenartigen Wechselrichter (40a, 40b, 40c, 40d) der dezentralen Energieerzeugungsanlage (10) verbunden ist und/oder
wobei zumindest eine weitere dezentrale Energieerzeugungsanlage (10') von dem einen Steuerungsmodul (22) gemeinsam mit der dezentralen Energieerzeugungsanlage (10) geregelt wird, wobei das zweite Wechselrichterschnittstellenmodul (24', 28) mit dem Wechselrichter (40a, 40b, 40c, 40d) der weiteren dezentralen Energieerzeugungsanlage (12a, 12b, 12c, 12d, 12e, 12f) verbunden ist.

14. Modulare Energieerzeugungsanlagenregelung (20) nach einem der vorstehenden Ansprüche,
wobei in dem Programmspeicher (38) des Steuerungsmoduls (22) weitere vordefinierte Softwarebausteine (60, 60a, 60b, 60c, 60d, 60e, 61) abgelegt sind und
wobei die vordefinierten Softwarebausteine dazu ausgelegt sind mit dem weiteren Erweiterungsmodul (24', 25, 26, 27, 28) zu kommunizieren.

15. Dezentrale Energieerzeugungsanlage (10), umfassend:
elektrische Leistung bereitstellende Generatoren, insbesondere Photovoltaikmodule, Windkraftgeneratoren, Biomasseanlagen und/oder Blockheizkraftwerke,
einen ersten Wechselrichter (40) zum Anpassen von elektrischen Parametern des elektrischen Netzes der dezentralen Energieerzeugungsanlage (10) an dasjenige des Versorgungsnetzes (100),
eine modulare Energieerzeugungsanlagenregelung (20) nach einem der vorstehenden Ansprüche zum Regeln von Parametern, insbesondere der Abgabeleistung, der dezentralen Energieerzeugungsanlage (10).
